# EUROPEAN PATENT APPLICATION

(11) **EP 1 039 371 A1**
(43) Date of publication of application: **27.09.2000**
(21) Application number: 99105926.2
(22) Date of filing: 24.03.1999
(51) Int. Cl.: G06F 5/06

(54) **An apparatus and a method for handling data between two asynchronous units**

(71) Applicant: MOTOROLA, INC., Schaumburg, IL 60196 (US)
(72) Inventor: Shahar, Boaz, Raanana (IL); Livne, Sarig, Tel-Aviv (IL); Barel, Udi, 75224 Rishon Le-Zion (IL)
(74) Representative: Richardt, Markus Albert

(57) **Abstract**

The present invention provides an apparatus and a method for handling data between a first and a second typically completely exclusive unit trough a common unit 300. This is done by mapping the status indicator of the entity 2 200, its value being determined by a position in a rotating shift register, to create a shadow status indicator; determining whether the measured is a defined value; assigning the defined value on the basis of the measured SSSI-value; determining a relationship between a FSI-value and the value; performing operations if a predetermined condition for the relationship is satisfied.

The common unit 300 could be a FIFO, the entity 1 100 is then a writing unit, the entity 2 200 is a reading unit, whereas the entity 1 100 creates a write and the entity 2 200 creates a read pointer. The write pointer is then compared to the shadow read pointer the clock.

## Description

### Background of the invention

A first-in first-out method, better known as FIFO, is a method of processing queue in which items are written in the same order in which they are read, namely the first data written is the first data to be read-out. This is a very common and popular method to interface between two completely mutual exclusive units, in order to transfer data from one unit to the other.

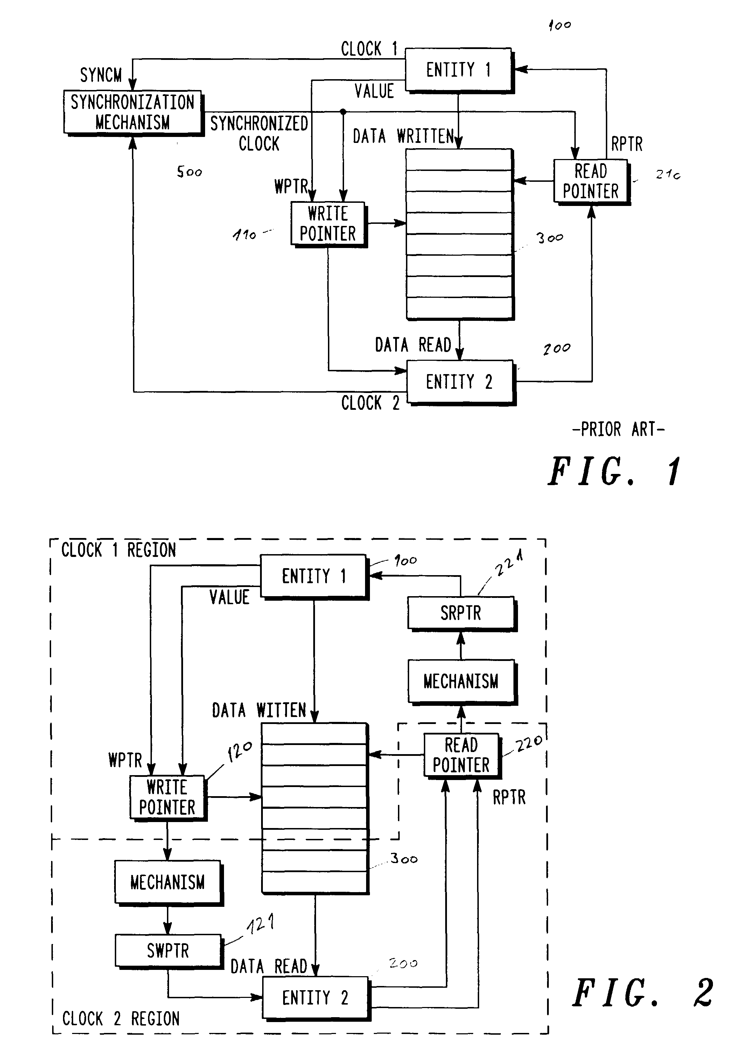

Architecture according to the prior art is shown in FIG. 1.

The present invention is not restricted to the FIFO method. The present invention can be applied to any common unit 300, such as a transfer buffer, through which the data are transferred from one entity 100 to the other entity 200. For the purpose of illustration, FIFO method will be used.

An entity 1 100, shown in FIG. lwrites the data into the FIFO in its own rate according to its Clock 1 105, which is then read by a second entity 200 in its own rate, according to its own Clock 2 205.

In the first generation of FIFOs the data were moved through the memory from the first to last memory. The back draw of this method is that the time needed to read the data could be very long, especially if the FIFO memory is very large. That is the reason that instead of data, two pointers are moved 110; 210, which show, which FIFO entry should be read next and in which FIFO entry the data should be written next. The first pointer is the write pointer 110, hereinafter designated as WPTR 120, which shows the first not occupied address and the other pointer is the read pointer 210, hereinafter designated as RPTR that shows the last occupied address. Instead of pointers other status indicators, such as flags, can be used as described in US Patent 5 640 515. However, for the sake of simplicity as illustration pointers will be further described.

The unit between the Entity 1100 and Entity 2 200 can for the sake of illustration be assumed as FIFO. Even though to describe the present invention a FIFO, with a writing and a reading unit, is used as an illustration, it should be understood that the same problem is encountered every time when two independent, typically asynchronous units are transferring data trough a common unit 300, when each unit works with its own independent clock.

If FIFO is empty WPTR 110 and RPTR 210 are equal and pointing to the beginning of the FIFO. When a data is written into FIFO, a writing unit would normally generate a signal INCREASE WRITE POINTER. The same happens with the reading unit, which would generate a signal INCREASE READ POINTER and the pointer is increased by increments of one. However, two different clocks govern WPTR 110 and RPTR 210, as well as the signal INCREASE POINTER, so that it can happen that WPTR 110 and RPTR 210 are compared at the moment the value of one of them changes and a false or an undefined value would be read. To avoid this, clocks of two units are synchronized by a synchronization apparatus hereinafter designated as SYNCM 500, which either generates a signal INCREASE POINTER according to a synchronized clock, or updates pointer at defined times according to the synchronized clock.

SYNCM 500 requires a synchronization clock, which is at least twice as fast than the slowest clock in the system. If the faster clock fulfills this requirement this clock can also be used as a synchronization clock.

RPTR 210 and WPTR 120 changes are then done according to the synchronized clock, and therefore both units 1 and 2 can compare WPTR 110 to RPTR 210 when they are stable, i.e. at the time when the values do not change, since the time of change is known to both units.

Therefore, the present invention seeks to provide an alternative to the SYNCM described (500), or even more to provide a method and an apparatus for handling data between two asynchronous units, without using any synchronization apparatus at all.

This objective has been solved according to the independent claims. The claim 1 provides an apparatus for handling data between an entity 1 100 and an entity 2 200, for example an entity 1 100 and an entity 2 200, the entity 1 100 and entity 2 200 each working with an independent clock and each unit being able to perform operations on a common unit 300, for example FIFO, the entity 1100 performing operations of a first kind, for example writing data and the entity 2 200 performing operations of the second kind on the common unit 300, for example reading data, wherein the entity 1 100 has a status indicator for the operations of a first kind (First Status Indicator-FSI), for example a write pointer according to the present invention 120, and the entity 2 200 has a status indicator for the operations of the second kind (Second Status Indicator -SSI), for example a read pointer according to the present invention 220.

The apparatus comprising means for mapping the SSI, its value being determined by a position of a shift register, in order to create a shadow status indicator for the operation of a the second kind, hereinafter designated as SSSI; means for determining whether the measured value of SSSI is a defined SSSI-value; means for assigning the defined value on the basis of the measured SSSI-value; means for determining a relationship between a FSI-value and the SSSI-value; means for performing operations of the first kind if a predetermined condition for the relationship between the FSI-value and the SSSI-value is satisfied.

The present invention provides an alternative for a synchronization apparatus SYNCM 500, allowing each entity 100; 200 to randomly, i.e. at any moment, to obtain a value which can be used for a comparison in order to make sure that no data or information have been overwritten by a writing unit or read twice by a reading unit. Therefore the present invention provides a method to read a value of the pointer according to the present invention, creating a shadow pointer hereinafter designated as SPTR. This method according to the invention will be hereinafter designated as "Random Sampling". The value obtained trough random sampling, creating a shadow pointer, whereas shadow write pointer is designated as SWPTR 121 and shadow read pointer as SRPTR 221. A shadow pointer is a copy of a pointer of an entity 1 100 whereas the shadow pointer is changed or updated according to the clock of an entity 2 200 and is used to compare the positions of pointers relative to each other.

The present invention enables to handle data between two units independent of their internal clock. It is therefore suitable for a jittered clock, or for two clocks working with a high but similar frequency, or if a unit must fit in a multiple frequency environment, which was not possible or is very difficult according to the prior art.

Therefore, no specific relationship between two clocks is necessary i.e. the faster clock does not have to be at least two times faster than the slower clock in the system. This is especially important when there are few units that have to be synchronized all of them working with their own clock.

### Short description of the drawings

- FIG. 1.: shows a FIFO architecture according to the prior art;
- FIG. 2.: shows a FIFO architecture according to the present invention;
- FIG. 3.: shows a Rotating Shift Register (RSR) 400 acting as a pointer according to the present invention;
- FIG. 4a.: shows the changes of WPTR, and of the shadow read pointer, hereinafter designated as SRPTR, according to clock 1;
- FIG. 4b: shows how Shadow write pointer, hereinafter designated as SWPTR 121 and RPTR 220 change according to clock 2;
- FIG. 5.: FIG. 5 shows entries of RSR 400 in different states with respect to a shift;
- FIG. 6a: shows possible states of the mixed state shown in FIG. 5 that could be encountered;
- FIG. 6b: shows states obtained after correction of undefined states, when the random sampling takes place; and
- FIG. 7: shows the flow chart for the method according to the present invention.

### Detailed description of the invention

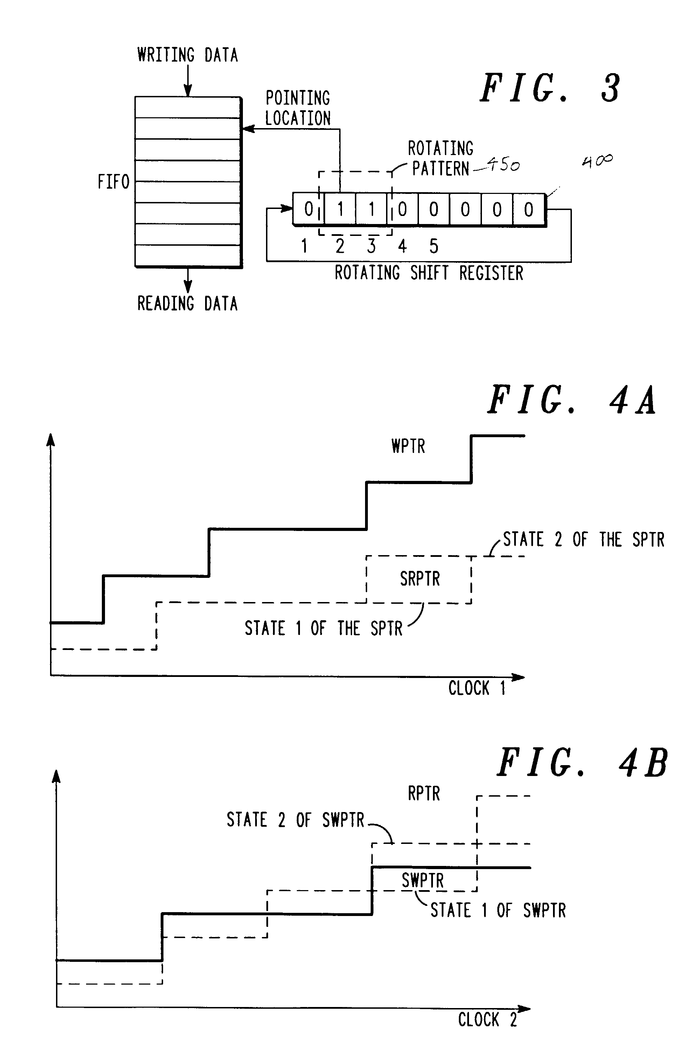

FIG. 2 describes FIFO architecture according to the present invention.

Instead of using a SYNCM 500 and instead of comparing the values of WPTR 120 and RPTR 220, both WPTR 120 and RPTR 220 changing on their own rate, the value of SWPTR 121 and RPTR 220 is compared by the entity 2 200, and SRPTR 221 and WPTR 120 are compared by the entity 1 100. The SWPTR 121 and SRPTR 221 are values of the WPTR 120 and the RPTR 220 respectively, which change according to the clock of the other unit, i.e. SWPTR 121 change with the clock of the Reading Unit and SRPTR 221 changes with the clock of the writing unit.

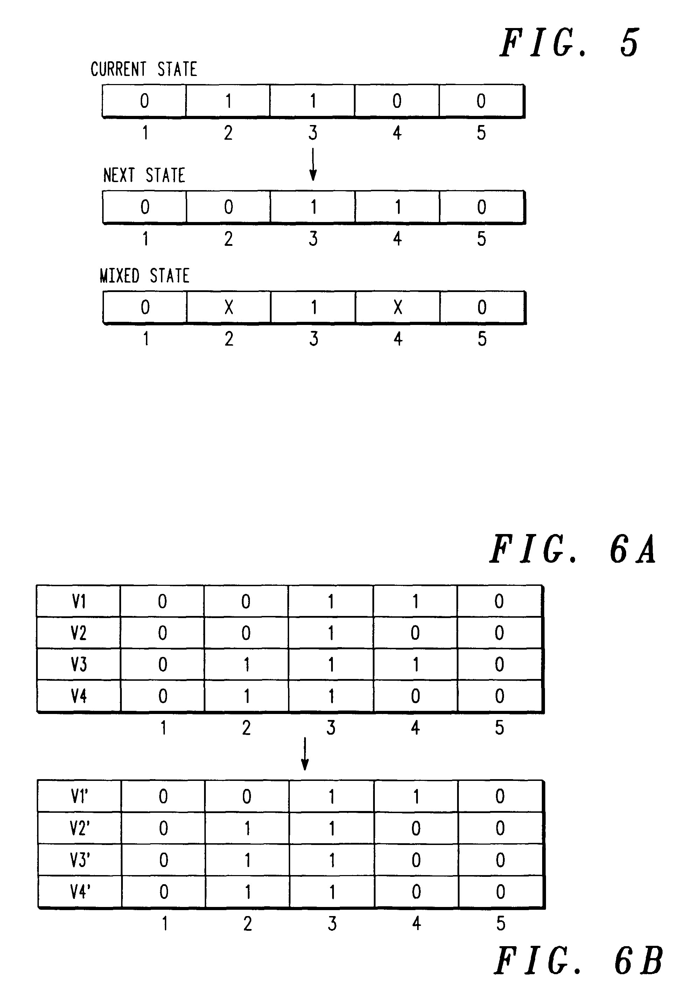

A Pointer according to the present invention shown in FIG. 2 120; 220 uses a counter according to the present invention, namely a shift register, and preferably a rotating shift register 400, hereinafter designates as RSR, which makes possible that a value can be read out at the any moment, and therefore also at the moment of change. In a case an undefined value is obtained for an address memory, there is a mechanism, which can assign a unique memory address of the pointer. This mechanism will be explained later in connection with FIG. 5 and 6. The value obtained in such a way is called a shadow pointer.

Instead of using classical binary counters, the invention provides a shift register and especially a RSR 400 as shown in FIG. 3, to indicate the value of the pointer. Every time the pointer is incremented, the RSR 400 moves to the right for example. In the preferred embodiment of the invention the RSR 400 has same N-Number of entries as the FIFO itself.

To determine the value of a pointer the shift register with a rotating pattern of "11", hereinafter designated as RP 450, is used. However, person skilled in the art will know that also other patterns such as for example rotating "00" or "111" can also be used for the purpose of the invention. Two rotating adjacent bits of the same value are, however sufficient.

The write pointing location is incremented by unit 1 whenever it writes data to the FIFO. The WPTR 120 is implemented by RSR 400 by one-bit-shift right to the RP 450. The new pointing location will be the next FIFO entry to be written, which is exactly the location, which would be pointed by a conventional counter.

FIG. 4 shows how WPTR 120 and the SRPTR 221 change according to the clock 1 and how RPTR 220 and SWPTR 121 change according to clock 2.

In FIG. 4a a value of the WPTR 120 and SPTR according to clock 1 is changed. In the example described SPTR is a SRPTR 221. It can be seen that at one point two states can exist for the SPTR, namely state 1 and state 2. This happens when the unit one, working on its own clocks tries to determine the value of the pointer created by the unit two, in the metastable state, i.e. just at the moment that the pointer of the unit two changes its value. If classical binary pointers were used, the value of the pointer would be undefined which would prevent the updating of the SPTR. According to the present invention however it is possible to assign a unique value of the pointer, which is always very close to the actual value of the pointer, and very often identical with it. This is described in connection with FIG. 5.

FIG. 5 shows entries of RSR 400 in different states with respect to a shift, namely CURRENT STATE before a shift, NEXT STATE after the shift and the MIXED STATE during the shift. The CURRENT STATE correspond to the STATE 1 of the SPTR shown in FIG. 4a for example, or to the STATE 1 of the SWPTR 121 shown in FIG. 4b respectively. The NEXT STATE corresponds to States 2 in FIG. 4a and 4b.

The value of RSR 400, shown in FIG. 3, represents five different FIFO addresses due to the first five RSR 400 bits. The FIFO addresses are uniquely mapped to the five possible positions of "11"-bits in this example. For example, it can be defined to use the right most of the two successive "11"-bits so that the CURRENT STATE points to the FIFO address 3 and the NEXT STATE points to FIFO address 4. During the shift, in the MIXED STATE, bits 2 and 4 marked "X" are undefined, if read out exactly at the moment in which the counter is incremented.

How the value of, for example WPTR 120, is determined is shown in FIG. 6. In the case that no change takes place at the moment of sampling i.e. in the stable state, designated as a CURRENT STATE in FIG. 5, the value of a pointer is defined and the SPTR can be updated. In the case however, that the sampling takes place at the moment the pointer is incremented (to go the NEXT STATE) some bits could be, and most probably would be, undefined or could read a wrong value. The bits that might be undefined are designated with "X" and the state obtained is designated as a mixed state, also called metastable state. It is not necessary that both bits designated with "X" are undefined. It is enough that any of the two bits are undefined to obtain values which cannot be read.

The values of the bits in the entries 1, 3 and 5 would, however, still be defined values, as they have not changed.

FIG. 6a shows the possible entries of the RSR 400 in the MIXED STATE of FIG. 5, in matrix form, together with a labeling left column for labeling the four possible entries V1-V4. V1-V4 are defined as combinations of possible values of the bits marked "X" in FIG. 5. From these four possible entries only two are defined representations of addresses, namely V1 and V4, which have exactly two successive "11"-bits and which represent the CURRENT STATE and the NEXT STATE of FIG. 5.

In the present invention it was realized that is not necessary to define the MIXED STATE exactly, or as being related to either to the CURRENT or to the NEXT STATE. It is important and sufficient that the MIXED STATE is related to one of these states only (either CURRENT or NEXT STATE) and not to other possible pointer values. Therefore, according to the present invention a complete uncertainty which would arise in the prior art, in the case, a pointer value is read out at the moment of change, is limited to an uncertainty between two values, which does not matter in FIFOs, because both of those values allow error-free functioning of a FIFO.

FIG. 6b shows how a unique value can be obtained by definition. It shows possible defined entries of the RSR 400 from processing the entries of FIG. 6a. The defined entries V1'-V4' result from the correction of V1-V4 of FIG. 6a respectively.

Even though many correction methods can be used the invention provides a method in which the correction is done in such a way, that the CURRENT STATE, is preferably obtained. This is done in such a way, that a left most digit of the undefined patterns, such as 010 or 111, should be 1. As the criteria that only two successive bits are present must also be fulfilled those states are changed to 110. In the in case of the state V2, reading 010 (for the entries 2 3 and 4), the value V2' reading 110 is obtained and in case of V3, reading 111 the value same value reading 110 for V3' is also obtained. The criteria that the most left digit is assigned '1' is arbitrary and person skilled in the art knows that they are many different ways to uniquely define a pointer. The method described has a purpose that in case that the value is not defined a lower value is assumed, to prevent that SRPTR 221 assumes a false value which would be higher than the actual one, leading to the overwriting of FIFO entries.

In the same way as for the WPTR 120, RSR 400 is also used for the RPTR 220. After reading an entry in the FIFO unit 2 shifts the RPTR 220 to the right pointing to the next entry in the FIFO to be read. In the preferred embodiment of the invention the RSR 400 determining the RPTR 220 has the same number of entries as FIFO itself. Therefore the RSR 400s determining the WPTR 120 and RPTR 220 pointers are of the same memory.

People skilled in art will know that the invention could be applied for many different purposes and data and memory structures and that means used in the invention are not the only ones that can be used to obtain the results as in the invention.

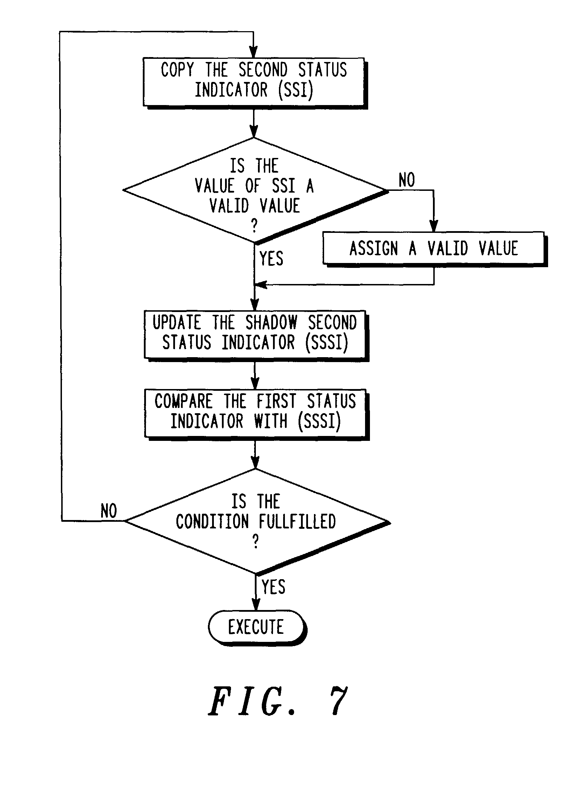

A general method for handling data between an entity 1 100 and an entity 2 200 has been shown in FIG. 7. The first and entity 2 200 are each working with an independent clock and each unit is being able to perform operations on a common unit 300, the entity 1 100 performing operations of a first kind on the common unit 300, and the entity 2 200 performing operations of the second kind on the common unit 300, wherein the entity 1 100 has a status indicator for the operation of a first kind (First Status Indicator-FSI) and the entity 2 200 has a status indicator for the operations of the second kind (Second Status Indicator -SSI), is characterized by the steps of mapping of the SSI, its value being determined by a location of a shift register, to create a shadow status indicator for the operation of a the second kind- SSSI; determining whether the value of SSSI measured is a defined SSSI-value and if not assigning the defined value on the basis of the measured SSSI-value; determining a relationship between a FSI-value and the SSSI-value; performing operations of the first kind if a predetermined condition for the relationship between the FSI-value and the SSSI-value is satisfied.

According to the preferred embodiment of the same method of the present invention the following steps are also performed on the entity 2 200; mapping the FSI, its value being determined by a position of a shift register, to create a shadow status indicator for the operation of a the second kind-SFSI; determining whether the value of SFSI measured is a defined SFSI-value and if not assigning the defined value on the basis of the measured SFSI-value determining a relationship between a SSI-value and the SFSI-value; performing operations of the second kind if a predetermined condition for the relationship between the SSI-value and the SFSI-value is satisfied.

In the case that the common unit 300 is a FIFO the entity 1 100 is writing data to the FIFO and the entity 2 200 is reading data from the FIFO in which case the FSI would be a WPTR 120 and SSI a RPTR 220, and to determine the value of the pointers of a shift register with a "11" rotating pattern 450 would be used.

The embodiments described are only for the illustrative purposes, and not intended to limit the scope of protection in any way. The scope of the invention is determined only by the following claims.

## Claims

1. An apparatus for handling data between an entity 1 (100) and an entity 2 (200), the entity 1 (100) and the entity 2 (200) each working with an independent clock and each of the units being able to perform operations on a common unit (300), the entity 1 (100) performing operations of a first kind on the common unit (300), and the entity 2 (200) performing operations of a second kind on the common unit (300), wherein the entity 1 (100) has a status indicator for the operation of the first kind (First Status Indicator-FSI) and the entity 2 (200) has a status indicator for the operation of the second kind (Second Status Indicator -SSI), wherein the entity 1 (100) comprises:
- means for mapping the SSI, its value being determined by a position of a shift register, to create a shadow status indicator for the operation of the second kind- SSSI;
- means for determining whether a measured value of SSSI is a defined SSSI-value;
- means for assigning the defined value on the basis of the measured value;
- means for determining a relationship between a FSI-value and the defined SSSI-value;
- means for executing the operation of the first kind if a predetermined condition for a relationship between the FSI-value and the SSSI-value is satisfied.

2. Apparatus according to claim 1 further comprising:
- means for mapping the FSI, its value being determined by a position of a shift register, to create a shadow status indicator for the operation of a the second kind- SFSI;
- means for determining whether a measured value of SFSI is a defined value;
- means for assigning the defined value on the basis of the measured SFSI-value;
- means for determining a relationship between a SSI-value and the SFSI-value;
- means for performing operations of the second kind if a predetermined condition for the relationship between the SSI-value and the SFSI-value is satisfied.

3. Apparatus according to claim 1, characterized in that the FSI and SSI are status pointers.

4. Apparatus according to claim 1, characterized in that the entity 1 (100) is writing data to the common unit (300) and the entity 2 (200) is reading data from the common unit (300).

5. Apparatus according to claim 1, characterized in that the common unit (300) is a FIFO-memory.

6. Apparatus according to claim 1, characterized in that the shift register is a rotating shift register (400).

7. Apparatus according to claim 6, characterized in that at least two adjacent 1-bits (450) are rotating in the rotating shift register (400).

8. Apparatus according to claim 7, characterized in that the assigning of the defined value is done by assigning 1 to the left most digit and fulfilling the condition that only two adjacent 1-bits are allowed.

9. Method for handling data between an entity 1 (100) and an entity 2 (200), the entity 1 (100) and entity 2 (200) each working with an independent clock and each unit being able to perform operations on a common unit (300), the entity 1 (100) performing operations of a first kind on the common unit (300), and the entity 2 (200) performing operations of the second kind on the common unit (300), wherein the entity 1 (100) has a status indicator for the operation of a first kind (First Status Indicator-FSI) and the entity 2 (200) has a status indicator for the operations of the second kind (Second Status Indicator -SSI), characterized by the following steps
- mapping of the SSI, its value being determined by a position of a shift register, to create a shadow status indicator for the operation of a the second kind- SSSI;
- determining whether a measured value of SSSI is a defined SSSI-value and if not assigning the defined value on the basis of the measured SSSI-value;
- determining a relationship between a FSI-value and the SSSI-value;
- performing operations of the first kind if a predetermined condition for the relationship between the FSI-value and the SSSI-value is satisfied.

10. Method according to claim 9, further characterized by
- mapping the FSI, its value being determined by a position of a shift register, to create a shadow status indicator for the operation of a the second kind- SFSI;
- determining whether a measured value of SFSI is a defined SFSI-value and if not assigning the defined value on the basis of the measured SFSI-value
- determining a relationship between a SSI-value and the SFSI-value;
- performing operations of the second kind if a predetermined condition for the relationship between the SSI-value and the SFSI-value is satisfied.

11. Method according to claim 9, characterized in that the entity 1 (100) is writing data to the common unit (300) and the entity 2 (200) is reading data from the common unit (300).

12. Method according to claim 9, characterized in that the common unit (300) is a FIFO-memory.

13. Method according to claim 9, characterized in that the shift register is a rotating shift register (400).

14. Method according to claim 9, characterized in that at least two adjacent 1-bits (450) are rotating in the shift register.
